# FASCICULE DE BREVET EUROPEEN

(11) **EP 2 501 949 B1**
(45) Date de publication et mention de la délivrance du brevet: **22.01.2014**
(21) Numéro de dépôt: 10779537.9
(22) Date de dépôt: 15.11.2010
(51) Int. Cl.: F16D 27/118, F16D 25/061, F16D 25/08

(54) **DISPOSITIF DE DESACCOUPLEMENT D'ARBRES EN CHARGE POUR BOITE DE TRANSMISSION DE PUISSANCE**
VORRICHTUNG ZUR ENTKOPPLUNG VON BELASTETEN WELLEN FÜR EINE KRAFTÜBERTRAGUNGSEINHEIT
DEVICE FOR UNCOUPLING LOADED SHAFTS, FOR A POWER TRANSMISSION UNIT

(30) Priorité: 18.11.2009 FR 0958158
(43) Date de publication de la demande: 26.09.2012
(73) Titulaire: Hispano Suiza, 92700 Colombes (FR)
(72) Inventeur: ABOUSLEIMAN, Vincent, F-92700 Colombes (FR); CANARD, Sylvain, F-92250 La Garenne Colombes (FR); DEPERROIS, André, Raymond, Christian, F-75015 Paris (FR); FRITZ, Romaric, F-92250 La Garenne-Colombes (FR)
(74) Mandataire: Gevers France
(86) Numéro de dépôt international: PCT/EP2010/067453
(87) Numéro de publication internationale: WO 2011/061140

(56) Documents cités:
- EP-A2- 1 749 995
- WO-A1-87/02106
- DE-A1- 10 126 485
- US-A- 2 428 336

## Description

Le domaine de la présente invention est celui de l'entraînement d'arbres de puissance et, en particulier, celui des systèmes pour le décrabotage, en fonctionnement, d'arbres qui transmettent des couples importants.

Les équipements mécaniques, et en particulier les équipements montés sur un moteur aéronautique, sont entraînés par des arbres de puissance qui sont reliés par un ensemble d'engrenages à un arbre menant, sur lequel ils prélèvent la puissance mécanique nécessaire au fonctionnement de l'équipement concerné.

Les puissances en question peuvent être particulièrement élevées et atteindre, par exemple dans le cas d'un équipement aéronautique tel qu'un alterno-démarreur, des couples de l'ordre de 600 N.m à une vitesse de rotation de 16000 tr/min. La force de frottement axiale exercée sur les pignons s'élève dans un tel cas à 4500 N. Il est par ailleurs nécessaire de prévoir la possibilité de désaccoupler l'arbre de l'équipement de celui du moteur, dans le cadre d'une procédure de secours pour, en cas d'avarie, décraboter l'équipement et ainsi éviter une propagation de panne. Une telle procédure est nécessaire, par exemple, dans le cas d'une manoeuvre de sortie d'une situation critique. De tels systèmes de désaccouplement doivent en outre être réalisés dans des environnements très restreints.

Dans le cadre d'une remise en service ultérieure de l'équipement il est également nécessaire de prévoir une manoeuvre de ré-accouplement de l'arbre de l'équipement, une fois que la situation d'urgence a disparu. Cette procédure est alors effectuée, arbres à l'arrêt ou à vitesse réduite, hors charges, les forces de frottement sur les dents étant ainsi quasiment supprimées.

Un système répondant à ces caractéristiques a été décrit dans le brevet EP 1412651 qui propose un système de crabotage entre deux arbres tournant dans le prolongement l'un de l'autre. Un crabot est un dispositif à dents permettant de coupler et désaccoupler deux pièces mécaniques. Le crabot est, ici, constitué par un arbre concentrique avec les arbres à accoupler, qui présente à une de ses extrémités une bague plane s'étendant radialement, sur laquelle s'appuie une bille pour générer le déplacement. La bille se déplace circonférentiellement par rapport aux arbres en suivant une trajectoire hélicoïdale matérialisée par une gorge pratiquée dans le carter.

Au cours de ce mouvement hélicoïdal la bille roule dans la gorge et reste en appui contre la bague radiale. Elle exerce une force selon une direction qui est décalée par rapport à l'axe du crabot. Il s'ensuit un couple nuisible au déplacement du crabot et des risques de coincements ou de blocages. La bille est par ailleurs animée d'un mouvement de roulement sans glissement le long de la gorge mais d'un mouvement de glissement le long de la bague radiale. Cela crée des forces parasites s'exerçant sur la bille, qui perturbent son mouvement et qui, compte tenu des forces de frottement très importantes qui s'exercent sur ces pièces peuvent rendre difficile la mise au point d'un tel système.

On connait également la demande de brevet allemande DE 10126485 qui décrit un système de décrabotage dans lequel, en position de fonctionnement, l'ensemble des pièces formant le crabot est entraînée en rotation. Il s'ensuit une mise en mouvement de masses qui ne sont sollicitées que lors du décrabotage et qui n'ont pas d'utilité en fonctionnement normal. Les inconvénients associés à ce système sont la création de moments d'inertie indésirables et l'usure de ces pièces tournantes.

La présente invention a pour but de remédier à ces inconvénients en proposant un système de désaccouplement d'arbres fonctionnant sous fortes charges, qui ne présente pas certains des inconvénients de l'art antérieur et, en particulier, dans lequel la majorité des pièces assurant le décrabotage sont fixes en focntionnement normal.

A cet effet, l'invention a pour objet un dispositif pour le désaccouplement de l'arbre d'entraînement d'un équipement depuis un arbre menant, ledit dispositif comprenant un crabot muni de premières dents et de premières cannelures pour se déplacer longitudinalement le long d'un premier desdits arbres par coopération avec des secondes cannelures portées par le second desdits arbres et engager ou désengager lesdites premières dents sur des secondes dents positionnées sur le second desdits arbres, ledit dispositif comportant en outre un moyen de déplacement longitudinal comprenant une partie fixe pour déplacer ledit crabot entre une position d'accouplement et une position de désaccouplement, la résultante de l'effort transmis par ledit moyen de déplacement longitudinal au crabot étant orientée selon l'axe de rotation dudit premier arbre et ayant son point d'application situé sur ledit axe, caractérisé en ce que ledit moyen de déplacement longitudinal entraîne ledit crabot par la coopération d'une pièce fixe en rotation avec une pièce liée au crabot et entraînée en rotation avec lui, un jeu longitudinal étant maintenu en fonctionnement entre ladite pièce fixe en rotation et ladite pièce entraînée en rotation.

Cette configuration, tout en évitant de créer des couples parasites qui nuiraient au déplacement du crabot le long de l'arbre sur lequel il est monté, garantit l'absence d'usure en fonctionnement normal des pièces servant au décrabotage.

Préférentiellement la pièce mobile longitudinalement porte une butée ou un roulement à billes, une première bague de ladite butée étant fixée à ladite pièce et la seconde bague étant mobile en rotation et positionnée en regard d'un plateau tournant s'étendant radialement par rapport audit crabot.

Avantageusement un jeu est positionné entre la bague mobile et le plateau tournant.

Dans une variante de réalisation, la pièce mobile longitudinalement porte une butée hydrodynamique recouverte d'un revêtement antifriction, positionnée en regard d'un plateau tournant s'étendant radialement par rapport audit crabot.

De façon préférentielle la pièce mobile longitudinalement porte un organe de ré-accouplement apte à être déployé radialement pour coopérer avec un élément dudit crabot et entraîner ledit crabot vers sa position de ré-accouplement.

Dans un second mode de réalisation la pièce s'étendant radialement comporte une cavité dans laquelle, lors du désaccouplement, vient s'insérer un élément mobile radialement, rendu solidaire dudit crabot en translation parallèlement audit premier arbre.

Préférentiellement l'élément mobile radialement est une bille positionnée dans un alésage radial pratiqué dans ledit crabot.

De façon plus préférentielle la bille est, en fonctionnement normal, maintenue en position, à travers l'alésage, dans un logement ménagé dans ledit premier arbre, par une extension longitudinale de ladite pièce s'étendant radialement.

Avantageusement la cavité comporte une face orientée de façon oblique par rapport à l'axe de rotation dudit premier arbre, de façon à permettre le retour de la bille dans l'alésage lors d'une opération de ré-accouplement.

Dans un mode particulier de réalisation les premières et secondes dents sont des dents hélicoïdales, exerçant l'une sur l'autre une force tendant à leur désaccouplement.

L'invention porte également sur un équipement comportant un dispositif de désaccouplement de son arbre d'entraînement depuis un arbre menant tel que décrit ci-dessus, et sur un moteur aéronautique sur lequel est monté un tel équipement.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue en coupe d'un dispositif de désaccouplement d'arbres de puissance selon un premier mode de réalisation de l'invention ;
- la figure 2 est une vue séquentielle de l'opération de désaccouplement d'arbres de puissance à l'aide d'un dispositif selon le premier mode de réalisation de l'invention ;
- la figure 3 est une vue en coupe d'un dispositif de désaccouplement d'arbres de puissance selon un second mode de réalisation de l'invention ;
- la figure 4 est une vue séquentielle de l'opération de désaccouplement d'arbres de puissance à l'aide d'un dispositif selon le second mode de réalisation de l'invention ;
- la figure 5 est une vue séquentielle de l'opération de ré-accouplement d'arbres de puissance à l'aide d'un dispositif selon le premier mode de réalisation de l'invention;
- la figure 6 est une vue séquentielle de l'opération de ré-accouplement d'arbres de puissance à l'aide d'un dispositif selon le second mode de réalisation de l'invention.

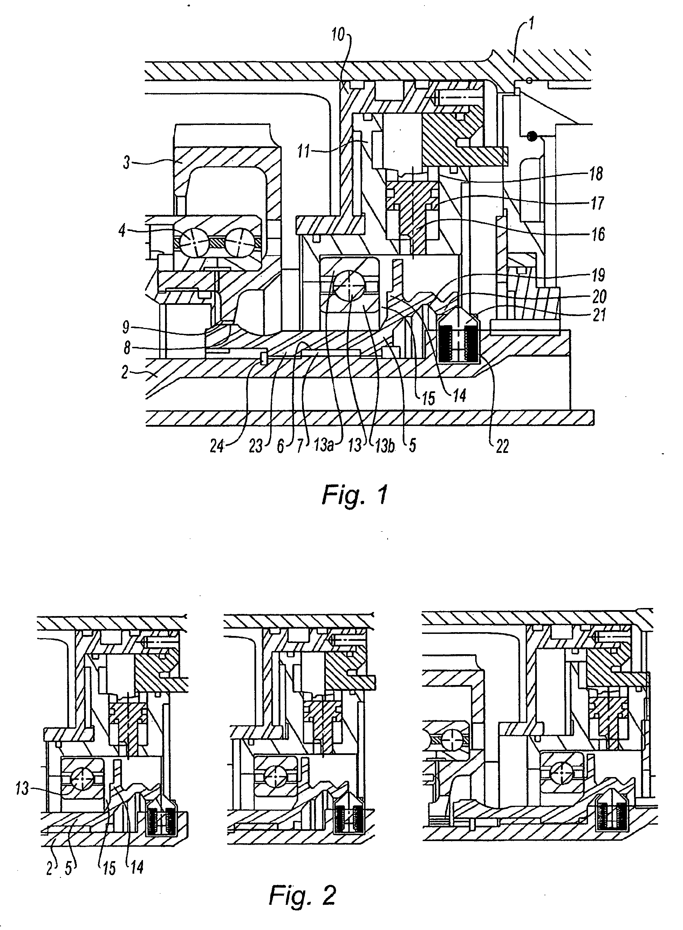

En se référant à la figure 1, on voit un équipement du type alterno-démarreur (appelé également starter-générateur ou S/G) composé d'un carter 1 renfermant un dispositif d'accouplement de son arbre de puissance, dit arbre récepteur 2, sur un arbre moteur 3 entraîné par la machine sur laquelle est monté l'alterno-démarreur. L'arbre moteur 3 est porté par des roulements 4 et tourne autour du même axe que celui de l'arbre récepteur 2. Ces deux arbres sont, en fonctionnement normal, couplés l'un à l'autre par l'intermédiaire d'une pièce cylindrique creuse dite crabot 5, également coaxiale avec les deux arbres, qui entoure l'arbre récepteur 2. Ce crabot 5 comporte des premières cannelures 6, sur sa face interne, qui coopèrent avec des secondes cannelures 7 leur faisant face sur la face externe de l'arbre récepteur 2. Grâce à ces deux séries de cannelures, le crabot 5 est apte à se déplacer longitudinalement le long de l'arbre récepteur 2, tout en lui restant couplé.

Le crabot comporte par ailleurs, à une de ses extrémités, des premières dents 8 sur sa face externe qui sont aptes à coopérer avec des secondes dents 9 portées sur sa face interne par l'arbre moteur 3. En fonction de la position du crabot 5 sur l'arbre récepteur 2, les premières dents 8 peuvent être soit enclenchées sur les secondes dents 9 (position d'accouplement illustrée sur la figure 1), soit libres, l'alterno-démarreur n'étant plus entraîné par l'arbre moteur 3 (position de désaccouplement illustrée par la dernière vue de la figure 2).

Un dispositif hydraulique de désaccouplement est, dans le premier mode de réalisation, illustré sur la partie droite de la figure 1. D'une façon générale, dans la suite de la description, le côté droit est celui qui est le plus éloigné des premières et secondes dents d'accouplement et qui correspond, en direction, au désaccouplement.

Le dispositif comporte une chambre hydraulique 10 dans laquelle circule un piston 11 qui se déplace parallèlement à l'axe des arbres. Ce piston 11 se déplace vers la droite de la figure 1 pour effectuer un désaccouplement, sous l'action d'une pression hydraulique envoyée dans la partie gauche de la chambre 10, via une canalisation non représentée. Il se déplace vers la gauche lors d'une opération de ré-accouplement des arbres.

Sur sa partie inférieure le piston 11 porte une butée ou un roulement à billes 13, positionnée parallèlement à l'axe des arbres, dont une première bague fixe 13a est reliée rigidement au piston 11 et dont la seconde bague 13b est libre en rotation, en roulant sans glisser sur les billes de la butée 13. Faisant face longitudinalement à cette bague mobile 13b se trouve un plateau tournant 14 s'étendant radialement à partir de la partie axiale du crabot 5. Un jeu 15 existe, en fonctionnement normal (c'est à dire en position accouplée), entre la bague mobile 13b de la butée à billes et le plateau 14 du crabot. Ce jeu s'élimine lors du désaccouplement, la bague mobile 13b étant entraînée en direction du plateau 14 par le piston 11 et venant alors en contact avec lui pour déplacer le crabot 5 et provoquer la séparation des premières et secondes dents 8 et 9. Du fait de ce jeu 15 on constate que le piston 11 et les deux bagues 13a et 13b ne sont pas sollicitées en fonctionnement normal et qu'elles ne sont pas entraînées en rotation. La bague mobile 13b n'est, quant à elle, entraînée en rotation que pendant la séquence de décrabotage.

Sur sa partie droite le crabot 5 présente une forme en dos d'âne, avec une première forme à double branche 19, tel un V renversé, et une seconde forme en simple branche 20. En face de la simple branche 20 est positionné un poussoir 21, dont la forme a, en négatif, la forme de la double branche 19 et dans lequel il s'intègre sous l'action d'un ressort 22. Le poussoir 21 maintient le crabot 5, soit dans la position d'accouplement qui correspond à son positionnement dans la double branche 19, soit dans la position de désaccouplement qui correspond à son positionnement contre la simple branche 20. Une butée axiale 23, placée sur le crabot 5 et qui coopère avec un épaulement radial 24 sur l'arbre récepteur 2, limite par ailleurs le déplacement vers la gauche du crabot, de façon à conserver les premières et secondes dents 8 et 9 en alignement. Le couple constitué du poussoir 21 et de la butée axiale 23 assure ainsi un positionnement relatif stable du crabot par rapport à l'arbre récepteur 2. La position de la butée axiale 23 est définie de façon que le jeu 15 ait la valeur recherchée et qu'ainsi la bague mobile 13b de la butée 13 ne soit pas sollicitée en permanence en fonctionnement normal.

Sur la figure 1 n'apparaît qu'une seule bille 13 et qu'un poussoir 21 car la figure est une vue en coupe de l'ensemble de désaccouplement, mais le système comporte une pluralité de billes et de poussoirs, en nombre supérieur ou égal à 2, qui sont réparties régulièrement sur la circonférence du plateau tournant 14 dans le but de fournir une poussée résultante orientée de façon parfaitement axiale et d'éviter d'éventuels coincements ou blocages du crabot 5.

La figure 1 montre également un dispositif pour le ré-accouplement des deux arbres, et le retour du crabot 5 à sa position initiale. Ce dispositif est constitué principalement par un doigt 16 s'étendant radialement par rapport à l'axe des deux arbres, en face de la face externe du plateau tournant 14. Ce doigt est positionné à l'extrémité d'un piston de ré-accouplement 17 qui se déplace à l'intérieur d'un cylindre 18. L'admission d'une pression, hydraulique ou pneumatique, dans le cylindre, au dessus du piston de ré-accouplement 17, entraîne la descente de ce piston et celle du doigt 16 en direction du plateau 14. Un ressort de rappel (non représenté) est positionné sous le piston de ré-enclenchement 17 et tend à faire rentrer le doigt 16 dans le cylindre 18 lorsque la pression de sortie du doigt est supprimée.

Le doigt 16 s'étend radialement, en position sorti, d'une longueur suffisante pour dépasser la face externe du plateau 14, de telle sorte qu'il puisse entraîner le crabot 5 en translation vers la gauche, le long dudit axe. Le cylindre 18, avec son piston de ré-accouplement 17 et le doigt 16, est porté par le piston 11, de façon à ce qu'il se meuve longitudinalement avec lui et qu'ainsi le doigt 16 reste sensiblement en regard et à droite du plateau tournant 14.

La figure 2 présente trois étapes dans le désaccouplement des deux arbres. Sur la vue de gauche les deux arbres sont accouplés, dans une position identique à celle de la figure 1. Un jeu longitudinal 15 existe entre la bague mobile 13b du roulement à billes et le plateau tournant 14. Sur la vue centrale le piston 11 s'est déplacé d'une longueur égale à celle du jeu précédent, sous l'action d'une pression envoyée dans la partie gauche de la chambre 10. Dans cette position le déplacement imprimé au piston 11 n'a fait que rattraper le jeu 15 et n'a pas encore déplacé le crabot 5. Les deux arbres 2 et 3 sont encore accouplés. Enfin, dans la vue de droite, l'application de la pression dans la partie gauche de la chambre 10 ayant été poursuivie, le piston 11 a parcouru la totalité de sa course et est venu en butée contre la paroi latérale droite de la chambre 10. Ce faisant, il a entraîné le roulement à billes 13 et, avec lui, le plateau tournant 14 qui lui est devenu solidaire par sa friction sur la bague mobile 13b. Le poussoir 21 a été déplacé de son positionnement contre la simple branche 20 à celui dans la double branche 19. Dans cette position le crabot 5 a été déplacé d'une longueur telle que les dents 8 et 9 sont séparées. Les deux arbres 2 et 3 sont alors désaccouplés, l'arbre d'entraînement 3 pouvant continuant à tourner alors que l'ensemble formé de l'arbre récepteur 2 et du crabot 5 n'est plus entraîné et s'arrête progressivement. Une fois le désaccouplement réalisé, l'équipement se retrouve déconnecté mécaniquement du moteur, sur lequel il ne prélève plus de puissance.

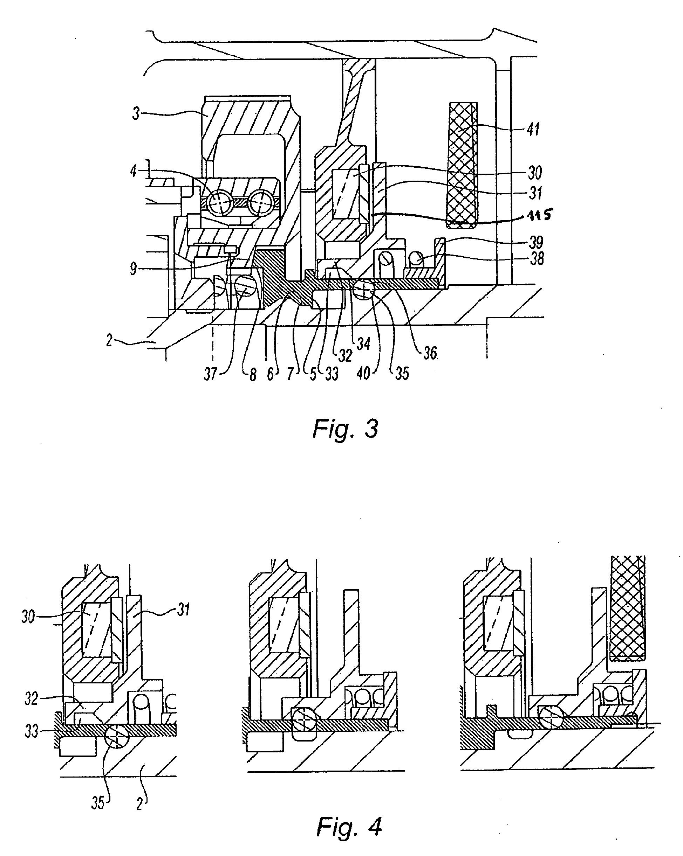

En se référant à la figure 3, on va maintenant décrire un deuxième mode de réalisation. Les éléments du dispositif ayant la même fonction que dans le premier mode de réalisation sont désignés par le même chiffre de référence et ne sont pas décrits à nouveau. Ici, les premières dents 8 sont positionnées sur une partie sensiblement radiale du crabot 5 et placées perpendiculairement aux secondes dents 9 de l'arbre moteur 3.

A la différence de la figure 1 les cannelures 6 et 7 sont, ici, hélicoïdales. De ce fait elles exercent l'une sur l'autre une force axiale qui tend à les éloigner et, en conséquence, à désaccoupler les deux arbres de façon automatique.

On voit sur la figure 3, sans que la forme décrite soit impérative, un actionneur électromagnétique 30 qui est positionné de façon à exercer sur une plaque ferromagnétique 31 une force de répulsion orientée parallèlement à l'axe des arbres 2 et 3. La plaque 31 s'étend radialement par rapport à l'axe des arbres et fait face à une pluralité d'actionneurs électromagnétiques (dont un seul est visible sur la coupe de la figure 3), qui sont répartis régulièrement sur la circonférence de la plaque 31 dans le but de fournir une poussée orientée de façon parfaitement axiale, sans désalignement, et d'éviter d'éventuels coincements ou blocages pour le crabot 5. Un jeu 115 est maintenu en fonctionnement entre l'actionneur électromagnétique 30 qui est fixe, et la plaque ferromagnétique 31 qui, en fonctionnement normal, est entraînée en rotation par le crabot 5. Ce jeu évite toute usure en fonctionnement normal entre les pièces tournantes et les pièces fixes en rotation.

La plaque 31 se poursuit à son extrémité interne par une extension longitudinale 32, dont la fonction est, en fonctionnement, de maintenir des billes 35 dans un logement 40 creusé dans la face externe de l'arbre récepteur 2. La face cylindrique interne de l'extension longitudinale 32 présente une série de cavités 33 destinées à servir de logements aux billes 35 lors du désaccouplement, celles-ci quittant alors leur logement 40 pour libérer longitudinalement le crabot 5 vis-à-vis de l'arbre récepteur 2. Chaque cavité 33 présente sur son côté droit une forme conique ou plane, formant une rampe 34 sur laquelle peuvent rouler les billes.

Le crabot 5 est traversé dans son épaisseur par plusieurs perçages 36 positionnés régulièrement le long de sa circonférence et correspondant angulairement aux cavités 33. Les billes 35 sont positionnées dans ces perçages et leur diamètre correspond sensiblement au diamètre du perçage, de façon qu'elles puissent traverser radialement le crabot, tout en étant maintenues longitudinalement. Les billes 35 sont positionnées, dans la configuration d'accouplement, du côté interne, dans le logement 40, et du côté externe, contre la face interne de l'extension longitudinale 32 de la plaque 31. Elles assurent ainsi le blocage en translation axiale du crabot 5, via le contact qu'elles ont avec, d'un côté les perçages 36 et, de l'autre le logement 40. Ces trois éléments tournent simultanément ce qui évite toute détérioration de la bille lorsque les deux arbres restent accouplés, le rôle de la bille étant alors de contrer l'effort de désaccouplement généré par les cannelures hélicoïdales.

Dans ce deuxième mode de réalisation l'extension longitudinale 32 de la plaque 31 est, en fonctionnement normal, positionné en appui contre le crabot 5. Un ressort 38 maintient l'extension longitudinale 32 en appui contre le crabot 5 pour empêcher la libération de la bille 35, ladite bille reprenant les efforts axiaux générés par les cannelures hélicoïdales 6 et 7.

Par ailleurs un ressort 37 accompagne l'effort de désaccouplement et permet de maintenir désaccouplé le crabot 5 de l'arbre moteur menant 3. En position accouplé, l'effort du ressort 37 est repris par la bille 35.

La figure 4 présente trois étapes lors du désaccouplement du crabot dans le deuxième mode de réalisation. Sur la vue de gauche les deux arbres sont accouplés, dans une position identique à celle de la figure 3. La bille 35 est positionnée sous l'extension longitudinale 32 de la plaque 31, dans un logement créé par l'alésage 36. Sur les deuxième et troisième vues l'actionneur électromagnétique 30 a repoussé la plaque 31 et son extension longitudinale 32 vers la droite, en comprimant le ressort de rappel 38. La cavité 33 se trouve ainsi amenée en face de la bille 35, qui s'y insère (troisième vue) sous l'action de la force centrifuge. Dans la deuxième vue la bille se situe dans la cavité 33 et ne bloque plus la translation du crabot 5 qui peut se désaccoupler sous l'effet des cannelures hélicoïdales et du ressort d'accompagnement 37. La troisième vue montre la plaque 31 en position extrême, repoussée au maximum sous l'action de l'actionneur électromagnétique, et le crabot 5 amené à fond vers la droite. Le crabot ayant été déplacé d'une longueur suffisante, les premières dents 8 du crabot sont désolidarisées des secondes dents 9 de l'arbre moteur 3. Les deux arbres 2 et 3 sont alors désaccouplés, l'arbre moteur 3 pouvant continuant à tourner alors que l'ensemble formé de l'arbre récepteur 2 et du crabot 5 n'est plus entraîné et s'arrête progressivement. Le désaccouplement étant réalisé, l'équipement est déconnecté mécaniquement du moteur sur lequel il ne prélève plus de puissance.

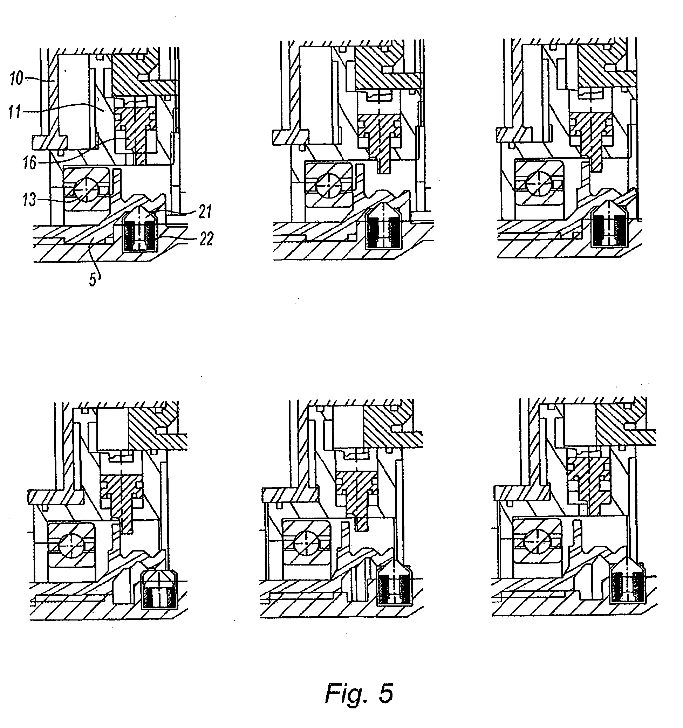

En se référant maintenant à la figure 5 on voit six étapes de l'opération de recrabotage de l'arbre récepteur 2 dans le cas du premier mode de réalisation de l'invention. Sur la vue de gauche les deux arbres sont désaccouplés, dans une situation identique à celle illustrée à la dernière étape de la figure 2. Le piston 11 est en contact avec la paroi située à droite sur la figure et la partie droite de la chambre 10 voit son volume fortement réduit du fait de la conformation de la chambre 10. Cette partie droite se trouve positionnée en face d'une alimentation en fluide, non représentée, tel que de l'air comprimé. Sur la deuxième vue, de l'air comprimé a été injecté dans la partie droite de la chambre 10, ce qui a eu pour effet de repousser le doigt 16 hors de la chambre, en direction du plateau tournant 14 du crabot. Sur la troisième vue de la figure 5, la pression injectée dans la partie droite de la chambre 10 ayant encore augmentée, on voit le piston 11 qui s'est déplacé vers la gauche, jusqu'à annuler le jeu existant entre le doigt 16 et le plateau 14. Sur la quatrième vue le piston s'est encore déplacé, entraînant avec lui le doigt 16, qui entraîne lui-même le crabot 5 par l'intermédiaire de sa face externe 19. Le piston 11 est représenté en fin de sa course, en appui contre la face gauche de la chambre 10 ; dans cette position le crabot a avancé suffisamment pour comprimer le ressort de poussoir 22 et faire sortir le poussoir 21 de son positionnement dans la double branche 19. Sur la cinquième vue le poussoir 21, sous l'action de son ressort 22, s'est engagé contre la simple branche 20 et, parallèlement, a poussé encore plus le crabot vers la gauche ; celui-ci a alors retrouvé sa position initiale, c'est-à-dire celle où ses premières dents 8 sont engagées dans les secondes dents de l'arbre moteur 3. Le jeu 15 entre le plateau 14 et la bague mobile 13b du roulement à billes s'est stabilisé à sa valeur nominale. Dans la sixième vue la pression injectée dans la partie droite de la chambre 10 a été relâchée et le doigt 16 est rentré dans son cylindre sous l'action de son ressort de rappel, laissant ainsi la voie libre pour le passage du plateau tournant 14 dans le cas où un nouveau désaccouplement serait nécessaire.

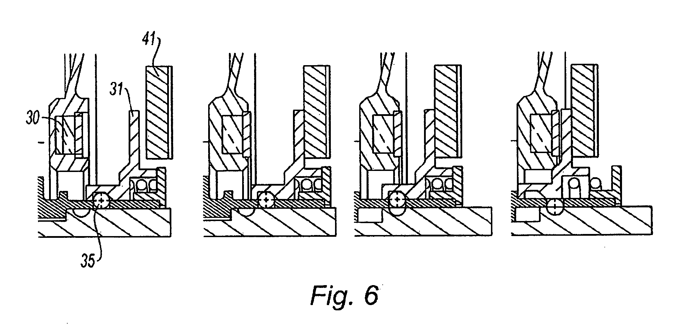

La figure 6 représente de même quatre étapes du déroulement de l'opération de recrabotage de l'arbre récepteur, dans le deuxième mode de réalisation. La figure montre une palette 41 qui a pour fonction de générer par son déplacement le recrabotage de façon mécanique. Cette palette peut être manoeuvrée depuis l'extérieur de l'équipement par l'intermédiaire d'une poignée (non représentée). Sur la première vue la palette est en position de repos et la plaque 31 est positionnée à droite dans une position identique à celle de la dernière vue de la figure 4, les deux arbres étant désaccouplés. Sur la deuxième vue la palette 41 a été déplacée vers la gauche et est venue en contact avec la plaque 31. Sur la troisième vue la palette 41 a repoussé la plaque 31 en direction du recrabotage et a amené la bille 35 en face de son logement 40. Sur la quatrième vue la plaque 31 a été amenée dans sa position initiale, en vis-à-vis de l'actionneur, électromagnétique 30, prête à en être à nouveau repoussée en cas d e besoin. Sous l'action de la force exercée le ressort d'accompagnement 37 a été comprimé et les dents 8 et 9 du crabot et de l'arbre moteur se sont ré-accouplées. La bille 35 a été repoussée dans son logement 40 par l'action de la rampe 34, et se retrouve positionnée entre l'extension longitudinale 32 et l'arbre récepteur 2, libérant ainsi en translation le crabot 5 pour lui permettre de répondre à nouveau à une éventuelle consigne de désaccouplement. Parallèlement le ressort de rappel 38 s'est détendu, maintenant à nouveau l'extension longitudinale 32 en appui contre le crabot 5 et empêchant la libération de la bille 35.

On va maintenant décrire, en se référant aux figures 2 et 5, le déroulement d'une opération de désaccouplement des arbres par la mise en oeuvre d'un dispositif selon le premier mode de réalisation. L'opération de remise en service et de ré-accouplement sera ensuite décrite.

Lorsqu'une situation critique survient et qu'il est nécessaire de décraboter un équipement sur un moteur aéronautique, une consigne est envoyée, soit par le pilote soit par un système de surveillance et de sécurité, en direction de l'équipement en question. Pour ce qui concerne l'alterno-démarreur représenté sur les figures, cette consigne se traduit par l'admission d'une pression hydraulique dans la partie gauche de la chambre 10 qui repousse le piston 11 en direction de la droite, c'est-à-dire vers la position de désaccouplement. Cette pression est avantageusement prise sur la pression de l'huile de lubrification de l'équipement, ce qui permet de réaliser cette opération sans faire appel à des moyens extérieurs à l'équipement et de se dispenser de mettre en place des moyens spécifiques à cette fin. Le déplacement du piston 11 vers la droite amène progressivement le roulement à billes 13 vers le plateau tournant 14 du crabot 5 en annulant le jeu 15. Lors du contact du roulement 13 avec le plateau tournant 14, sa bague mobile 13b est brutalement entraînée en rotation et se met à rouler sans glisser sur les billes, la bague fixe 13a restant, quant à elle, immobile par rapport au piston 11. Le piston 11 poursuivant son déplacement, le roulement 13 pousse le plateau tournant et l'entraîne vers la droite d'une longueur suffisante pour que les premières dents 8 du crabot se désaccouplent des secondes dents 9 de l'arbre moteur 3. N'étant plus entraînés, la bague mobile 13b, le crabot 5 et l'arbre récepteur 2 ralentissent progressivement et finissent par s'arrêter. Le désaccouplement des arbres, qui était recherché, est ainsi réalisé quelle que soit la force qui pouvait s'exercer en fonctionnement sur les dents 8 et 9.

L'opération de ré-accouplement s'effectue, de préférence en atelier ou à tout le moins sur le moteur arrêté, de façon qu'aucune force significative ne s'exerce sur les dents, ce qui rendrait leur accouplement mécaniquement très difficile. La pression résiduelle éventuelle qui subsiste dans la partie gauche de la chambre 10 est supprimée par une technique classique et de l'air comprimé, ou tout autre fluide approprié, est injecté dans la partie droite de la chambre 10. Cette pression repousse en premier lieu le doigt 16 qui fait saillie en direction du crabot 5 et de son plateau 14. Une fois le doigt entièrement sorti la pression de l'air comprimé repousse le piston 11 vers la gauche ce qui a pour effet, dans un premier temps, de déplacer le roulement à billes 13 d'une longueur égale au jeu 15 sans que le crabot ne bouge, puis, dans un deuxième temps, de déplacer à la fois la butée 13 par l'intermédiaire de sa bague fixe 13a liée au piston, et le crabot 5 par l'intermédiaire du doigt 16, tout en conservant le jeu 15 entre ces deux pièces. Le dimensionnement de la chambre 10 et du crabot 5 est tel que lorsque le piston 11 arrive en butée contre la partie gauche de la chambre 10, les premières dents 8 sont situées au niveau des secondes dents 9, avec lesquels elles sont désormais de nouveau accouplées. Pour terminer, la pression dans la partie droite de la chambre 10 est mise à l'air libre, le doigt 16 s'efface et le l'équipement est prêt à être remis en service, un nouveau désaccouplement étant possible par une mise en pression hydraulique de la partie gauche de la chambre 10.

En ce qui concerne le second mode de réalisation le désaccouplement et le ré-accouplement se déroulent de la façon suivante, en référence à l'enchaînement des opérations décrit sur les figures 4 et 6.

La consigne de désaccouplement, en provenance du pilote ou d'un système de sécurité, déclenche le passage d'un courant dans la bobine de l'actionneur électromagnétique 30, ce qui génère une force de répulsion sur la plaque ferromagnétique 31. Cette plaque se déplace vers la droite, en référence à la figure 3, en comprimant le ressort de rappel 38. Le crabot n'étant plus contraint, par la bille (35), à rester en contact avec l'arbre moteur 3, les premières et secondes dents 8 et 9 se repoussent l'une l'autre du fait de la forme hélicoïdale donnée aux cannelures 6 et 7. Le désaccouplement se poursuit au fur et à mesure que la plaque 31 se déplace.

L'extension longitudinale 32 de la plaque 31 se déplace par rapport à la bille 35 qui arrive en face de la rampe 34 et de la cavité 33. Sous l'action de la force centrifuge qui s'exerce sur elle la bille monte dans la cavité et vient coupler le déplacement du crabot 5 à celui de la plaque 31. La bille suit alors le déplacement du crabot sur lequel elle n'exerce aucune force et au désaccouplement duquel elle ne s'oppose plus.

Le ré-accouplement des arbres nécessite, comme indiqué sur la figure 6, l'intervention mécanique d'un opérateur, qui agit sur une poignée pour déplacer la palette 41. Cette palette repousse la plaque 31 dans la direction du recrabotage. La bille est tout d'abord déplacée en direction de son logement 40 puis forcée dans ce logement par la rampe 34 pour redevenir emprisonnée entre l'extension longitudinale 32 et l'arbre récepteur 2. Alors que la course de la plaque 31 se poursuit, l'extension longitudinale 32 roule sur la bille 35 qu'elle maintient contre l'arbre récepteur 2. Parallèlement l'extension longitudinale 32 vient en contact avec le crabot 5 qu'elle déplace vers la gauche et force ainsi les premières et secondes dents 8 et 9 à se ré-accoupler.

En fin de course de la palette 41 le crabot est dans une position où ses premières dents 8 sont accouplées aux secondes dents 9 de l'arbre moteur 3 ; la plaque ferromagnétique 31 se retrouve proche de l'actionneur 30 sans entrer en contact avec lui, un jeu 115 ayant été recréé pour éviter leur usure par frottement, en fonctionnement normal. Le recrabotage est terminé et l'opérateur peut renvoyer la palette 41 vers sa position de repos (représentée sur la figure 3), en agissant sur la poignée prévue à cet effet.

D'autres variantes sont possibles. Il est notamment envisageable de remplacer la butée à billes 13 dans le premier mode de réalisation par une butée hydrodynamique qui glisse contre le plateau tournant 14 du crabot. Une telle butée est recouverte d'un revêtement antifriction, c'est-à-dire à faible coefficient de frottement, du type Téflon de la société Dupont de Nemours et est pressée contre la surface du plateau ; les surfaces en contact sont lubrifiées par de l'huile sous pression. Une telle configuration élimine l'accélération des éléments tournants, tels que la bague mobile 13b, qui sont mis brutalement en rotation dans le premier mode de réalisation lors du désaccouplement.

## Revendications

1. Dispositif pour le désaccouplement de l'arbre d'entraînement (2) d'un équipement depuis un arbre menant (3), ledit dispositif comprenant un crabot (5) muni de premières dents (8) et de premières cannelures (6) pour se déplacer longitudinalement le long d'un premier desdits arbres (2) par coopération avec des secondes cannelures (7) portées par le second desdits arbres (3) et engager ou désengager lesdites premières dents (8) sur des secondes dents (9) positionnées sur le second desdits arbres (3), ledit dispositif comportant en outre un moyen de déplacement longitudinal comprenant une partie fixe (10, 30) agissant sur une pièce mobile longitudinalement (11, 31) pour déplacer ledit crabot (5) entre une position d'accouplement et une position de désaccouplement, la résultante de l'effort transmis par ledit moyen de déplacement longitudinal au crabot (5) étant orientée selon l'axe de rotation dudit premier arbre (2) et ayant son point d'application situé sur ledit axe,
**caractérisé en ce que** ledit moyen de déplacement longitudinal entraîne ledit crabot (5) par la coopération d'une pièce fixe en rotation (13, 30) avec une pièce (14, 31) liée au crabot et entraînée en rotation avec lui, un jeu longitudinal (15, 115) étant maintenu en fonctionnement entre ladite pièce fixe en rotation (13, 30) et ladite pièce entraînée en rotation (14, 31).

2. Dispositif selon la revendication 1 dans lequel la pièce mobile longitudinalement (11) porte une butée ou un roulement à billes (13), une première bague (13a) de ladite butée étant fixée à ladite pièce et la seconde bague (13b) étant mobile en rotation et positionnée en regard d'un plateau tournant (14) s'étendant radialement par rapport audit crabot (5).

3. Dispositif selon la revendication 2 dans lequel le jeu (15) est positionné entre la bague mobile (13b) et le plateau tournant (14).

4. Dispositif selon la revendication 1 dans lequel la pièce mobile longitudinalement (11) porte une butée hydrodynamique recouverte d'un revêtement antifriction, positionnée en regard d'un plateau tournant (14) s'étendant radialement par rapport audit crabot (5).

5. Dispositif selon l'une des revendications 2 à 4 dans lequel la pièce mobile longitudinalement (11, 31) porte un organe de ré-accouplement (16) apte à être déployé radialement pour coopérer avec un élément dudit crabot (19) et entraîner ledit crabot vers sa position de ré-accouplement.

6. Dispositif selon la revendication 1 dans lequel la pièce mobile longitudinalement (31) comporte une cavité (33) dans laquelle, lors du désaccouplement, vient s'insérer un élément mobile radialement (35), rendu solidaire dudit crabot (5) en translation parallèlement audit premier arbre (2).

7. Dispositif selon la revendication 6 dans lequel l'élément mobile radialement (35) est une bille positionnée dans un alésage radial (36) pratiqué dans ledit crabot (5).

8. Dispositif selon la revendication 7 dans lequel la bille (35) est, en fonctionnement normal, maintenue en position, à travers l'alésage (36), dans un logement (40) ménagé dans ledit premier arbre (2), par une extension longitudinale (32) de ladite pièce s'étendant radialement (31).

9. Dispositif selon l'une des revendications 7 ou 8 dans lequel la cavité (33) comporte une face orientée de façon oblique par rapport à l'axe de rotation dudit premier arbre, de façon à permettre le retour de la bille (35) dans l'alésage (36) lors d'une opération de ré-accouplement.

10. Dispositif selon l'une des revendications 1 à 9 dans lequel les premières et secondes cannelures (6, 7) sont des cannelures hélicoïdales, exerçant l'une sur l'autre une force tendant à leur désaccouplement.

11. Équipement comportant un dispositif de désaccouplement de son arbre d'entraînement (2) depuis un arbre menant (3) selon l'une des revendications ci-dessus.

12. Moteur aéronautique sur lequel est monté un équipement selon la revendication précédente.

## Patentansprüche

1. Vorrichtung zum Entkoppeln der treibenden Welle (2) eines Geräts von einer Antriebswelle (3), wobei die Vorrichtung eine Klaue (5) umfasst, die mit ersten Zähnen (8) und mit ersten Rillen (6) versehen ist, um sich in Längsrichtung entlang einer ersten der Wellen (2) durch Zusammenwirken mit zweiten Rillen (7), die von der zweiten der Wellen (3) getragen werden, zu bewegen und die ersten Zähne (8) mit zweiten Zähnen (9), die an der zweiten der Wellen (3) angeordnet sind, in Eingriff oder aus dem Eingriff zu bringen, wobei die Vorrichtung ferner ein Längsbewegungsmittel aufweist, das einen festen Teil (10, 30) umfasst, der auf ein in Längsrichtung bewegliches Teil (11, 31) einwirkt, um die Klaue (5) zwischen einer Einkopplungsposition und einer Entkopplungsposition zu bewegen, wobei die Resultierende der Kraft, die durch das Längsbewegungsmittel auf die Klaue (5) übertragen wird, in der Drehachse der ersten Welle (2) ausgerichtet ist und ihr Aufbringungspunkt auf dieser Achse liegt,
**dadurch gekennzeichnet, dass** das Längsbewegungsmittel die Klaue (5) durch das Zusammenwirken eines drehfesten Teils (13, 30) mit einem Teil (14, 31) mitnimmt, das mit der Klaue verbunden ist und mit dieser zur Drehung angetrieben wird, wobei ein Längsspiel (15, 115) in Funktion zwischen dem drehfesten Teil (13, 30) und dem zur Drehung angetriebenen Teil (14, 31) gehalten wird.

2. Vorrichtung nach Anspruch 1, wobei das in Längsrichtung bewegliche Teil (11) einen Anschlag oder ein Rollenlager (13) trägt, wobei ein erster Ring (13a) des Anschlags an dem Teil befestigt ist und der zweite Ring (13b) drehbeweglich ist und einer Drehplatte (14) gegenüber angeordnet ist, die sich in radialer Richtung relativ zu der Klaue (5) erstreckt.

3. Vorrichtung nach Anspruch 2, wobei das Spiel (15) zwischen dem beweglichen Ring (13b) und der Drehplatte (14) positioniert ist.

4. Vorrichtung nach Anspruch 1, wobei das in Längsrichtung bewegliche Teil (11) einen hydrodynamischen Anschlag trägt, der mit einer Antireibungsbeschichtung beschichtet ist und einer Drehplatte (14) gegenüber angeordnet ist, die sich in radialer Richtung relativ zu der Klaue (5) erstreckt.

5. Vorrichtung nach einem der Ansprüche 2 bis 4, wobei das in Längsrichtung bewegliche Teil (11, 31) ein Wiedereinkopplungsorgan (16) trägt, das dafür geeignet ist, in radialer Richtung ausgefahren zu werden, um mit einem Element der Klaue (19) zusammenzuwirken und die Klaue in ihre Wiedereinkopplungsposition mitzunehmen.

6. Vorrichtung nach Anspruch 1, wobei das in Längsrichtung bewegliche Teil (31) einen Hohlraum (33) aufweist, in dem, beim Entkoppeln, ein in radialer Richtung bewegliches Element (35) eintritt, das mit der Klaue (5) in Translationsverschiebung parallel zu der ersten Welle (2) verbunden wurde.

7. Vorrichtung nach Anspruch 6, wobei das in radialer Richtung bewegliche Teil (35) eine Kugel ist, die in einer radialen Bohrung (36) angeordnet ist, die in der Klaue (5) ausgebildet ist.

8. Vorrichtung nach Anspruch 7, wobei die Kugel (35), in normalem Betrieb, durch die Bohrung (36) hindurch, in einem Sitz (40) in Position gehalten wird, der in der ersten Welle (2) vorgesehen ist, durch eine Längsausdehnung (32) des Teils, das sich in radialer Richtung erstreckt (31).

9. Vorrichtung nach einem der Ansprüche 7 oder 8, wobei der Hohlraum (33) eine Fläche aufweist, die relativ zu der Drehachse der ersten Welle schräg ausgerichtet ist, derart, dass sie die Rückkehr der Kugel (35) in die Bohrung (36) bei einem Wiedereinkopplungsvorgang ermöglicht.

10. Vorrichtung nach einem der Ansprüche 1 bis 9, wobei die ersten und zweiten Rillen (6, 7) spiralförmige Rillen sind, die aufeinander eine Kraft ausüben, die zur ihrer Entkopplung tendiert.

11. Gerät mit einer Vorrichtung zum Entkoppeln seiner treibenden Welle (2) von einer Antriebswelle (3) nach einem der vorhergehenden Ansprüche.

12. Flugzeugmotor, an dem ein Gerät nach dem vorhergehenden Anspruch montiert ist.

## Claims

1. A device for uncoupling the drive shaft (2) of equipment from an input shaft (3), said device comprising a claw coupling (5) provided with first teeth (8) and first splines (6) so as to be displaced longitudinally along a first of said shafts (2) by cooperation with second splines (7) carried by the second of said shafts (3) and to engage or disengage said first teeth (8) on or from second teeth (9) positioned on the second of said shafts (3), said device further comprising a longitudinal displacement means comprising a fixed part (10, 30) acting on a longitudinally mobile part (11, 31) to displace said claw coupling (5) between a coupled position and an uncoupled position, the resultant force transmitted by said longitudinal displacement means to the claw coupling (5) being oriented along the axis of rotation of said first shaft (2) and having its point of application located on said axis,
**characterized in that** said longitudinal displacement means drives said claw coupling (5) by the cooperation of a part fixed in rotation (13, 30) with a part (14, 31) connected to the claw coupling and driven in rotation therewith, a longitudinal clearance (15, 115) being maintained during operation between said part fixed in rotation (13, 30) and said part driven in rotation (14,31).

2. The device as claimed in claim 1, in which the longitudinally mobile part (11) carries a stop or a ball bearing (13), a first ring (13a) of said stop being fixed to said part and the second ring (13b) being mobile in rotation and positioned opposite a rotating plate (14) extending radially relative to said claw coupling (5).

3. The device as claimed in claim 2, in which the clearance (15) is located between the mobile ring (13b) and the rotating plate (14).

4. The device as claimed in claim 1, in which the longitudinally mobile part (11) carries a hydrodynamic stop covered by an anti-friction coating, positioned opposite a rotating plate (14) extending radially relative to said claw coupling (5).

5. The device as claimed in one of claims 2 to 4, in which the longitudinally mobile part (11, 31) carries a recoupling member (16) capable of being deployed radially to cooperate with an element of said claw coupling (19) and to drive said claw coupling into its recoupled position.

6. The device as claimed in claim 1, in which the longitudinally mobile part (31) comprises a cavity (33) into which is inserted, during the uncoupling process, a radially mobile element (35) fixed to said claw coupling (5) in a translation parallel to said first shaft (2).

7. The device as claimed in claim 6, in which the radially mobile element (35) is a ball positioned in a radial bore (36) formed in said claw coupling (5).

8. The device as claimed in claim 7, in which the ball (35), during normal operation, is maintained in position via the bore (36) in a housing (40) formed in said first shaft (2) by a longitudinal extension (32) of said part extending radially (31).

9. The device as claimed in one of claims 7 and 8, in which the cavity (33) comprises a face oriented obliquely relative to the axis of rotation of said first shaft, so as to permit the return of the ball (35) to the bore (36) during a recoupling operation.

10. The device as claimed in one of claims 1 to 9, in which the first and second splines (6, 7) are helicoidal splines, exerting on one another a force designed to uncouple said splines.

11. Equipment comprising a device for uncoupling its drive shaft (2) from an input shaft (3) as claimed in one of the preceding claims.

12. An aeronautical engine on which is mounted equipment as claimed in the preceding claim.
